# EUROPÄISCHE PATENTANMELDUNG

(11) **EP 2 367 164 A2**
(43) Veröffentlichungstag der Anmeldung: **21.09.2011**
(21) Anmeldenummer: 11158277.1
(22) Anmeldetag: 15.03.2011
(51) Int. Cl.: G09B 5/02

(54) **Tafelanordnung**

(30) Priorität: 15.03.2010 DE 102010015978
(71) Anmelder: Waldner Labor- und Schuleinrichtungen GmbH, 01097 Dresden (DE)
(72) Erfinder: Keibach, Dieter, 88267 Vogt (DE)
(74) Vertreter: Wilhelms · Kilian & Partner Patentanwälte

(57) **Zusammenfassung**

Tafelanordnung (1) mit einer Tafel (2) und einem Projektor (3), bei der die Tafel (2) und der Projektor (3) entlang einer ersten Richtung (Y) geführt und verschiebbar angeordnet sind, und eine lösbare Kopplungsvorrichtung (8, 9) zum Koppeln der Bewegung der Tafel (2) und des Projektors (3) vorgesehen ist, wobei im gekoppelten Zustand der lösbaren Kopplungsvorrichtung (8, 9) die Tafel (2) und der Projektor (3) nur gemeinsam verschiebbar sind, während im entkoppelten Zustand der lösbaren Kopplungsvorrichtung (8, 9) zumindest die Tafel (2) (3) separat verschiebbar ist.

## Beschreibung

Die vorliegende Erfindung betrifft eine Tafelanordnung mit einem Projektor und einer Tafel, welche insbesondere einen als interaktives Whiteboard ausgebildeten Bereich aufweisen kann.

Ein Whiteboard stellt eine Alternative zu einer üblichen Kreidetafel dar und weist eine glatte Oberfläche auf, welche mit speziellen Whiteboard-Stiften beschreibbar ist. Die Schrift kann anschließend auf einfache Weise mit einem trockenen Schwamm entfernt werden. Ein interaktives Whiteboard ist eine elektronische Tafel, welche Sensoren zur Detektierung einer Berührung aufweist und an einen Computer angeschlossen werden kann. Mittels eines Projektors wird die grafische Benutzeroberfläche des Computers, welche üblicherweise auf einem Monitor ausgegeben wird, auf das Whiteboard projiziert. Auf diese Weise ist die grafische Benutzeroberfläche beispielsweise bei Verwendung des interaktiven Whiteboards in einem Klassenzimmer für alle Schüler gut sichtbar. Die Steuerung des Computers kann zusätzlich zur üblichen Steuerung mit einer Maus dadurch erfolgen, dass ein entsprechender Bereich des interaktiven Whiteboards, auf den eine Schaltfläche projiziert wird, berührt wird, wodurch der entsprechende Schaltvorgang ausgelöst und vom Computer ausgeführt wird.

Bei fest installierten, d.h. nicht beweglich angeordneten interaktiven Whiteboards, kann der Projektor beispielsweise an der Decke montiert sein. Dies hat jedoch den Nachteil, dass auf große Bereiche des interaktiven Whiteboards aufgrund des Schattens einer Person, die das interaktive Whiteboard bedient, nicht die grafische Benutzeroberfläche des Computers projiziert wird.

Weiterhin sind Anordnungen bekannt, bei denen der Projektor fest mit dem interaktiven Whiteboard verbunden ist. Auf diese Weise kann die Schattenbildung reduziert werden. Ferner kann bei fest verbundenem interaktiven Whiteboard und Projektor die Anordnung in horizontaler bzw. vertikaler Richtung verschiebbar ausgebildet werden, indem das interaktive Whiteboard an einer entsprechenden Führungseinrichtung vorgesehen wird, die beispielsweise an der Wand oder am Boden befestigt ist. Wenn jedoch die Tafelanordnung eine weitere Tafel, beispielsweise eine Kreidetafel, umfasst, welche ebenfalls verschiebbar angeordnet ist, so wird die Bewegungsfreiheit des Benutzers durch den Projektor eingeschränkt, wenn sich das interaktive Whiteboard in einer bodennahen Position befindet und auf eine darüber angeordnete Kreidetafel geschrieben werden soll.

Es ist daher eine Aufgabe der Erfindung, eine Tafelanordnung bereitzustellen" bei der der Bedienungskomfort erhöht ist.

Diese Aufgabe wird gelöst durch eine Tafelanordnung mit einer Tafel und einem Projektor, bei der die Tafel und der Projektor entlang einer ersten Richtung geführt und verschiebbar angeordnet sind, und eine lösbare Kopplungsvorrichtung zum Koppeln der Bewegung der Tafel und des Projektors vorgesehen ist, wobei im gekoppelten Zustand der lösbaren Kopplungsvorrichtung die Tafel und der Projektor nur gemeinsam verschiebbar sind, während im entkoppelten Zustand der lösbaren Kopplungsvorrichtung zumindest die Tafel separat verschiebbar ist.

Im entkoppelten Zustand der lösbaren Kopplungsvorrichtung können jedoch auch die Tafel und der Projektor jeweils separat verschiebbar sein.

Durch das Vorsehen der Kopplungsvorrichtung kann der Projektor im entkoppelten Zustand gegebenenfalls separat nach oben in Richtung Decke geschoben werden, oder in seiner Position beispielsweise in der Nähe der Decke verbleiben, während gleichzeitig die Tafel nach unten in Richtung des Bodens geschoben werden kann. Im Fall, dass die Tafelanordnung eine weitere Tafel, bspw. eine Kreidetafel, enthält, die entlang der ersten Richtung geführt und verschiebbar angeordnet ist, kann diese entlang der ersten Richtung zwischen der Tafel und dem Projektor angeordnet werden und es kann auf diese geschrieben werden, ohne dass der Projektor die Bewegungsfreiheit des Benutzers einschränkt.

Gemäß einer Ausführungsform umfasst die Tafelanordnung ferner einen Trägerrahmen, an dem der Projektor befestigt ist, wobei die Kopplungsvorrichtung eine an einem sich entlang der ersten Richtung sich erstreckenden Element des Trägerrahmens vorgesehene Einrastvorrichtung und eine an der Tafel befestigte und entlang einer zweiten Richtung beweglich gelagerte Stange aufweist, und im gekoppelten Zustand ein Ende der Stange in der Einrastvorrichtung einrastet.

Durch diese Einrastvorrichtung wird bewirkt, dass der Abstand des Projektors von der Tafel entlang der ersten Richtung im eingerasteten Zustand stets derselbe ist, so dass die Projektion des Projektors auf die Tafel unabhängig von der Position der Tafel immer auf denselben Bereich der Tafel erfolgt.

Bevorzugt umfasst die Kopplungsvorrichtung eine weitere an einem sich entlang der ersten Richtung erstreckenden weiteren Element des Trägerrahmens vorgesehene Einrastvorrichtung und eine weitere an der Tafel befestigte, und entlang der zweiten Richtung beweglich gelagerte Stange, wobei eine Federeinrichtung zwischen der Stange und der weiteren Stange vorgesehen ist, welche entfernte Enden der Stange und der weiteren Stange in entgegengesetzte Richtungen drückt und im gekoppelten Zustand die entfernten Enden der Stange und der weiteren Stange jeweils in den entsprechenden Einrastvorrichtungen einrasten. Auf diese Weise wird das Auftreten von Scherkräften verhindert, welche ausgebildet werden, wenn eine Einrastung nur an einer Seite der Tafel erfolgt.

Gemäß einer Ausführungsform sind die Stange und die weitere Stange unterhalb einer an der Tafel befestigten Griffleiste gelagert und einander zugewandte Enden der Stange und der weiteren Stange mit Griffeinrichtungen versehen, welche über Eingriffsöffnungen in der Griffleiste zugänglich sind. Die Griffeinrichtungen können als angewinkelt Vorsprünge der einander zugewandten Enden, als Ösen, Nasen oder Ähnlichem ausgebildet sein.

Bei dieser Ausführungsform kann ein Benutzer auf einfache Weise durch Eingreifen mit zwei Fingern in die Eingriffsöffnungen, Zusammendrücken der Griffeinrichtungen und Verschieben der Tafel nach unten den Einrastmechanismus lösen. Nach der Entkopplung kann dann die Tafel unabhängig vom Projektor bewegt werden, bis eine erneute Koppelung erfolgt.

Bevorzugt weisen die Elemente des Trägerrahmens ein dem Boden zugewandtes abgeschrägtes Ende auf. Bei dieser Ausführungsform werden ausgehend vom entkoppelten Zustand beim Verschieben der Tafel nach oben die entfernten Enden der Stange und der weiteren Stange durch die abgeschrägten Enden der Elemente des Trägerrahmens zunächst aufeinander zu bewegt. Sobald die Einrastposition erreicht ist, werden die entfernten Enden der Stange und der weiteren Stange mittels der Federeinrichtung automatisch in die Einrasteinrichtungen gedrückt.

Gemäß einer Ausführungsform umfasst die Tafelanordnung ferner eine Führungseinrichtung, welche mehrere Paare Führungsschienen aufweist, wobei die Tafel an einem zweiten Trägerrahmen befestigt ist, welche von einem ersten Paar der mehreren Führungsschienen geführt wird und der Trägerrahmen von einem zweiten Paar der mehreren Paare Führungsschienen geführt wird.

Die Tafelanordnung kann ferner einen dritten Trägerrahmen umfassen, an dem die weitere Tafel befestigt ist, wobei der dritte Trägerrahmen von einem dritten Paar Führungsschienen entlang der ersten Richtung geführt und verschiebbar angeordnet ist.

Gemäß einer weiteren Ausführungsform ist die lösbare Kopplungsvorrichtung als magnetische bzw. elektromagnetische Kopplungsvorrichtung ausgeführt, welche beispielsweise zumindest einen Elektromagneten umfasst. Die Tafelanordnung kann ferner einen Trägerrahmen aufweisen, an dem der Projektor befestigt ist, wobei der Elektromagnet an einem oberen Ende der Tafel vorgesehen ist und zumindest ein dem Elektromagneten im gekoppelten Zustand gegenüberliegender Teilabschnitt des Trägerrahmens magnetisierbar bzw. als Dauermagnet ausgebildet ist. In einer anderen Ausführungsform ist der Elektromagnet an einem unteren Ende des Trägerrahmens vorgesehen und zumindest ein dem Elektromagneten im gekoppelten Zustand gegenüberliegender Teilabschnitt eines oberen Endes der Tafel magnetisierbar bzw. als Dauermagnet ausgebildet.

Der Elektromagnet ist mittels eines Schalters ansteuerbar, der beispielsweise an der Tafel angebracht ist, und zum Ein- bzw. Ausschalten eines Stromflusses durch den Elektromagneten dient. Wenn der Elektromagnet sich in der Nähe des gegenüberliegenden magnetisierbaren Teilabschnittes des Trägerrahmens bzw. der Tafel befindet, und der Elektromagnet mittels des Schalters eingeschaltet wird, bewegen sich die Tafel und der Projektor aufgrund der magnetischen Kraft aufeinander zu und verbleiben in einem festgelegten Abstand, auch wenn die Tafel bewegt wird. Wenn der Elektromagnet ausgeschaltet wird, werden der Projektor und die Tafel entkoppelt, so dass die Tafel und der Projektor unabhängig voneinander entlang der ersten Richtung verschoben werden können.

Gemäß einer Ausführungsform umfasst die Tafelanordnung ferner eine Führungseinrichtung, welche mindestens ein Paar Führungsschienen aufweist, wobei die Tafel an einem zweiten Trägerrahmen befestigt ist, und der Trägerrahmen und der zweite Trägerrahmen von dem mindestens einen Paar Führungsschienen geführt werden. Im Unterschied zur mechanischen Kopplungseinrichtung ist somit bei elektromagnetischer Koppelung keine weitere Führungsschiene erforderlich.

Gemäß einer Weiterbildung ist ein dritter Trägerrahmen vorgesehen, an dem die weitere Tafel befestigt ist, wobei der dritte Trägerrahmen von einem weiteren Paar Führungsschienen entlang der ersten Richtung geführt und verschiebbar angeordnet ist.

Bevorzugt ist zumindest ein Bereich der Tafel als interaktives Whiteboard ausgebildet.

Bei einer anderen Ausführungsform ist der Projektor als Kurzdistanz-Beamer ausgebildet, welche Detektoren zur Erfassung einer Position eines interaktiven Stifts in einem Bereich der Tafel aufweist. Die Benutzung des interaktiven Stifts ersetzt hierbei eine übliche Computermaus. Bei dieser Ausführungsform ist es somit nicht erforderlich, dass die Tafel Sensoren zur Detektierung einer Berührung aufweist.

Im Folgenden wird anhand der zugehörigen Zeichnungen ein Ausführungsbeispiel einer Tafelanordnung näher beschrieben.

Es zeigen:
Fig. 1 eine perspektivische Ansicht einer Tafelanordnung gemäß einer Ausführungsform, bei der eine Tafel mittels einer Kopplungseinrichtung an einen Projektor gekoppelt ist.
Fig. 2 eine perspektivische Ansicht der in der Fig. 1 dargestellten Tafelanordnung, bei der Projektor von der Tafel entkoppelt ist,
Fig. 3 eine Vorderansicht einer Tafelanordnung gemäß einer Ausführungsform,
Fig. 4 eine Draufsicht auf die in Fig. 3 dargestellte Tafelanordnung,
Fig. 5 einen Querschnitt durch die Tafelanordnung entlang der in Fig. 3 gezeigten Schnittlinie A-A
Fig. 6 eine Detailansicht des in Fig. 5 mit VI gekennzeichneten Bereiches, und
Fig. 7 eine Detailansicht des in Fig. 3 dargestellten Bereiches VII.

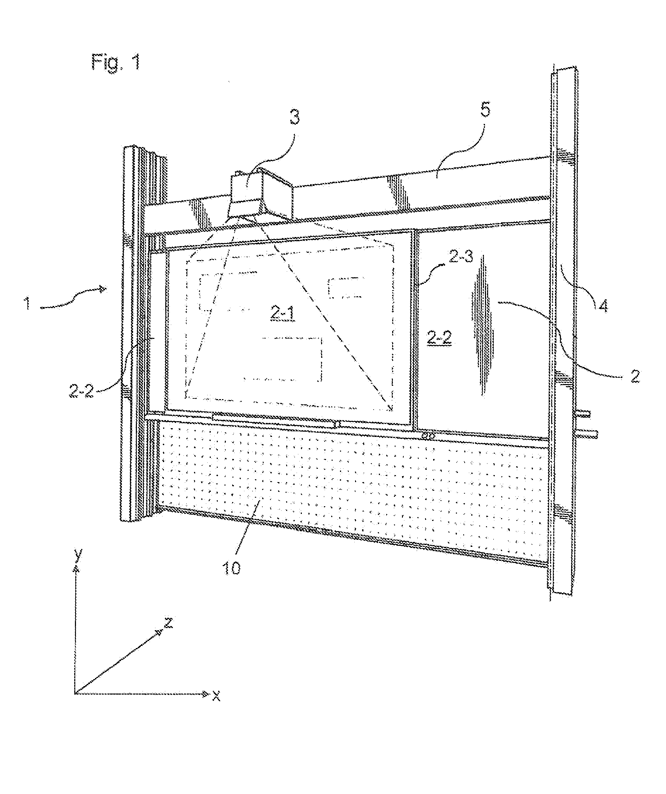

Fig. 1 zeigt eine perspektivische Ansicht einer Tafelanordnung 1 gemäß einer Ausführungsform, bei der die Tafel mittels einer lösbaren Kopplungseinrichtung, welche als mechanische oder elektromagnetische Kopplungseinrichtung ausgebildet sein kann, an den Projektor gekoppelt ist. Die Tafelanordnung umfasst einen Projektor 3, eine Tafel 2 und eine Kreidetafel 10, welche entlang der in der Fig. 1 gezeigten Richtung Y und in entgegengesetzter Richtung -Y mittels der Führungseinrichtung 4 geführt und bewegbar angeordnet sind. Die Tafel 2 weist Bereiche 2-2, welche als Whiteboard bzw. Weißwandtafel ausgebildet sind sowie einen Bereich 2-3 auf, der als interaktives Whiteboard ausgebildet sein kann. Der an einem Trägerrahmen 5 befestigte Projektor 3 projiziert die grafische Benutzeroberfläche eines Computers auf einen Abschnitt 2-1 des interaktiven Whiteboards 2-3. Der Abschnitt 2-1 kann Sensoren zur Detektierung einer Berührung aufweisen. In einer anderen Ausführungsform kann der Projektor als Kurzdistanz-Beamer ausgebildet sein, welcher Sensoren zur Erfassung einer Position eines speziellen Stifts in dem Abschnitt 2-1 aufweist. Bei dieser Ausführungsform stellt der spezielle Stift eine Alternative zur üblichen Computermaus zur Steuerung des Computers dar. Der Abschnitt 2-1 stellt somit Schaltflächen der grafischen Benutzeroberfläche dar. Wenn ein Bereich des Abschnitts 2-1 von einem Benutzer berührt wird bzw. der Benutzer den speziellen Stift in diesem Bereich derart verwendet, dass ein Schaltvorgang ausgelöst werden soll, führt der Computer den entsprechenden Schaltvorgang aus.

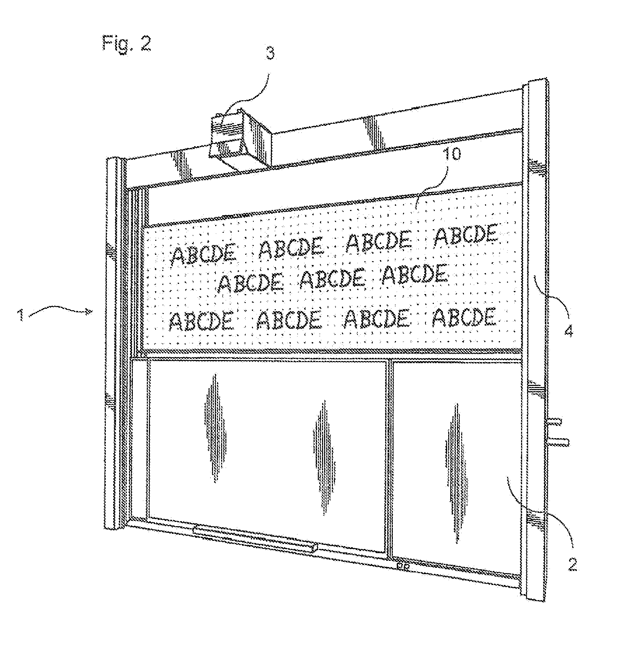

Fig. 2 zeigt eine perspektivische Ansicht der in der Fig. 1 dargestellten Tafelanordnung 1, bei der der Projektor 3 von der Tafel 2 entkoppelt wurde. Der Projektor 3 ist am oberen Ende der Führungseinrichtung 4, d. h, nahe der Decke angeordnet, und die Tafel 2 ist am unteren Ende der Führungseinrichtung 4, d. h. nahe des Bodens angeordnet. Die Kreidetafel 10 hingegen befindet sich entlang der Y-Richtung gesehen zwischen der Tafel 2 und dem Projektor 3, Mittels der lösbaren Kopplungsvorrichtung gemäß der vorliegenden Erfindung können somit der Projektor 3 und die Tafel 2 entkoppelt werden, und beispielsweise die Tafel 2 unabhängig vom Projektor 3 nach unten geschoben werden, so dass ein Benutzer in Kopfhöhe auf die Kreidetafel 10 schreiben kann, ohne durch den Projektor 3 behindert zu werden.

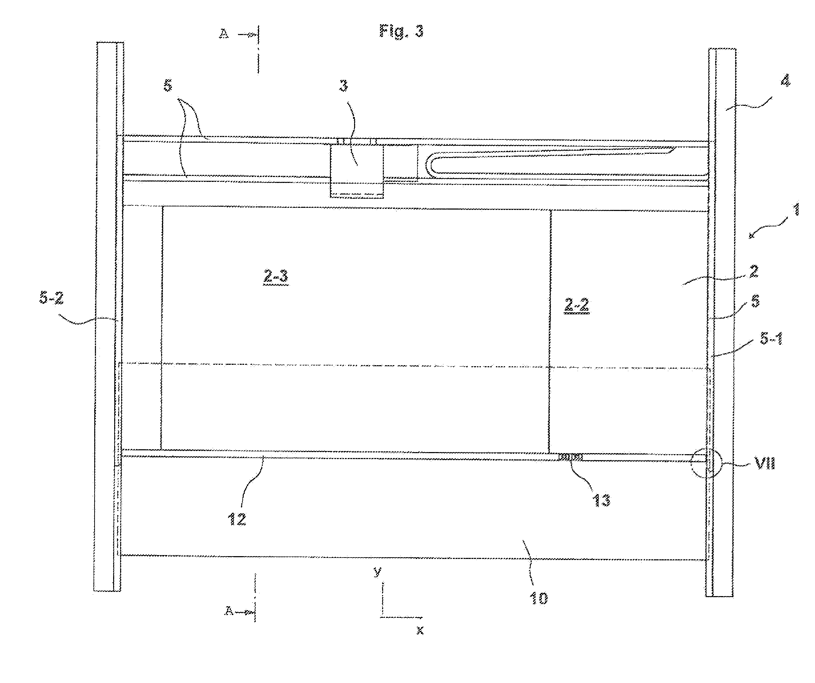

Fig. 3 zeigt eine Vorderansicht einer Tafelanordnung 1 gemäß einer Ausführungsform. Die Tafelanordnung 1 umfasst einen Projektor 3, der an einem Trägerrahmen 5 befestigt ist, welche mittels der Führungseinrichtung 4 sowohl entlang der Y- als auch der -Y-Richtung beweglich angeordnet ist. Die Tafel 2 ist an einem weiteren Trägerrahmen 6 befestigt (nicht dargestellt in Fig. 3), welcher ebenfalls mittels der Führungseinrichtung 4 beweglich entlang der Y-Richtung und entlang der entgegengesetzten Richtung -Y angeordnet ist. Die Tafel 2 weist einen Bereich 2-1 mit Sensoren auf, welche eine Berührung detektieren und Bereiche 2-2, welche als konventionelles Whiteboard ausgebildet sind. An dem dem Boden zugewandten Ende der Tafel 2 ist eine Griffleiste 12 vorgesehen, auf welcher beispielsweise Stift abgelegt werden können und welche zur Verschiebung der Tafel 2 durch einen Benutzer verwendet werden kann. In der Griffleiste 12 sind Eingriffsöffnungen 13 vorgesehen, durch welche einander zugewandte Enden zweier unterhalb der Griffleiste in X-Richtung verlaufende, beweglich gelagerte Stangen (nicht gezeigt in Fig. 3) aufeinander zu bewegt werden können. Die einander zugewandten Enden der beiden Stangen sind vorzugsweise mit Griffeinnchtungen, wie etwa Nasen, Ösen oder Ähnlichem versehen, damit der Benutzer die Enden auf einfache Weise zusammendrücken kann.

Zwischen den beiden Stangen ist eine Federeinrichtung angeordnet, die bewirkt, dass die einander abgewandten Enden der beiden Stangen in positive bzw. negative X-Richtung gedrückt werden. Die entfernten Enden der beiden Stangen ragen dabei jeweils im entkoppelten Zustand über die entsprechenden Enden der Tafel 2 hinaus. In Y-Richtung verlaufende Elemente 5-1, 5-2 des Trägerrahmens 5 weisen Einrastvomchtungen (nicht dargestellt in Fig. 3), die bspw, als Löcher ausgebildet sind, auf, Zur Kopplung der Tafel 2 mit dem Projektor 3 wird die Tafel 2 in Y-Richtung verschoben, bis die entfernten Enden der Stangen in die entsprechenden Einrastvorrichtungen einrasten. Sobald dies erfolgt ist, wird bei einer Bewegung der Tafel 2 gleichzeitig der Projektor mit der gleichen Geschwindigkeit wie die Tafel bewegt. Ferner ist im gekoppelten Zustand der Abstand entlang der Y-Richtung zwischen der Tafel 2 und dem Projektor 3 durch das Einrasten der entfernten Enden der Stangen in die Einrastvorrichtungen fest eingestellt, so dass selbst bei einer gemeinsamen Bewegung der Tafel 2 und des Projektors 3 der Projektor 3 die grafische Benutzeroberfläche stets auf den selben Bereich der Tafel 2 projiziert.

Zur Entkopplung des Projektors 3 und der Tafel 2 werden die beiden Stangen durch Eingreifen mit zwei Fingern in die beiden Eingriffsöffnungen und zusammendrücken der einander zugewandten Enden der beiden Stangen so weit aufeinander zu bewegt, dass die entfernten Enden der beiden Stangen nicht mehr in die entsprechenden Einrastvorrichtungen eingreifen. Im zusammengedrückten Zustand der beiden Enden wird dann die Tafel 2 nach unten bewegt. Wenn die Tafel 2 nach der Entkopplung entlang der Y-Richtung bewegt wird, wird der Projektor nicht mehr gleichzeitig mitbewegt, solange keine erneute Kopplung zwischen Projektor 3 und Tafel 2 erfolgt.

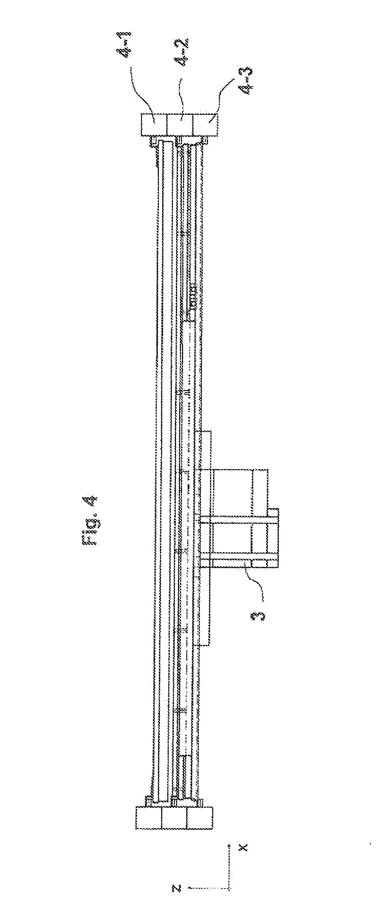

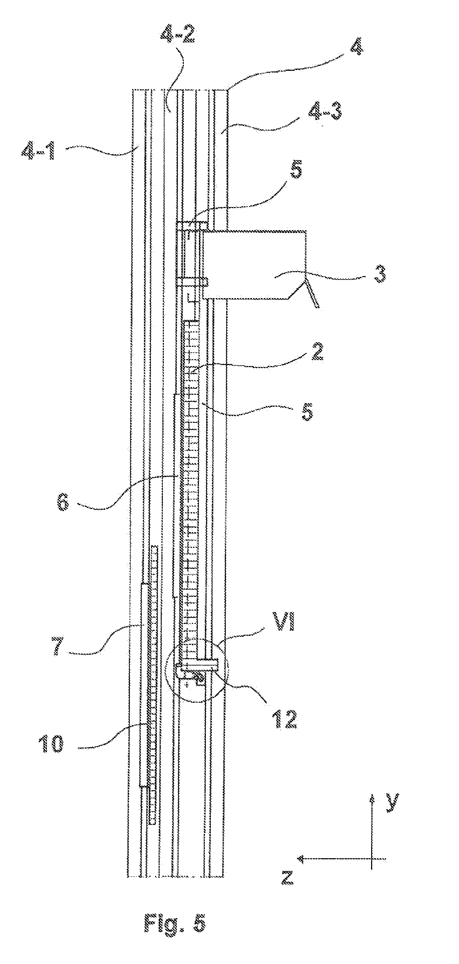

Fig. 4 zeigt eine Draufsicht auf die in Fig. 3 dargestellte Tafelnordnung 1 und Fig. 5 zeigt einen Querschnitt durch die Tafelanordnung 1 entlang der in Fig. 3 gezeigten Schnittlinie A-A. Die Führungseinrichtung 4 weist drei Paare Führungsschienen 4-1, 4-2 und 4-3 auf. Mittels der Führungsschienen 4-1 wird ein Trägerrahmen 7 geführt, an welchem die Kreidetafel 10 befestigt ist und mittels der Führungsschienen 4-2 wird ein Trägerrahmen 6 geführt, an dem die Tafel 2 befestigt ist. Der Projektor 3 ist an dem Trägerrahmen 5 befestigt, welcher mittels der Führungsschienen 4-3 geführt wird. An dem dem Boden zugewandten Ende der Tafel 2 ist eine Griffleiste 12 vorgesehen, unterhalb derer die Stangen mittels einer Führung 11 geführt werden.

In dem nicht in den Fig. dargestellten Fall, dass die lösbare Kopplungsvorrichtung als magnetische bzw. elektromagnetische Kopplungsvorrichtung ausgeführt ist, erfolgt die Befestigung und die Führung der Tafel 2 und der weiteren Tafel 10 ebenso wie vorstehend dargestellt. Der Projektor 3 ist ebenfalls an einem Trägerrahmen befestigt, welcher jedoch mittels der Führungsschienen 4-2 geführt wird, so dass auf das dritte Paar Führungsschienen 4-3 verzichtet werden kann.

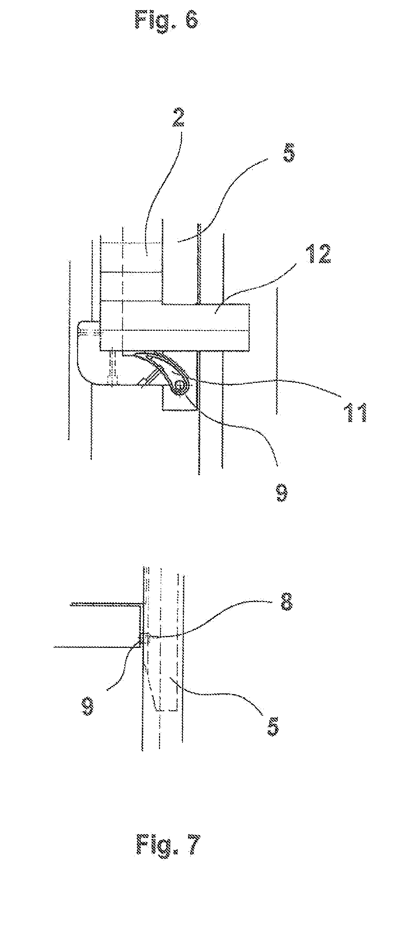

Fig. 6 ist eine Detailansicht des in Fig. 5 mit VI gekennzeichneten Bereichs. Die Tafel 2 und der Trägerrahmen 5 sind zwischen Öffnungen der Führungsschienen 4-2 und 4-3 angeordnet. Das Ende der Stange 9, welche innerhalb der Führung 11 angeordnet ist, ist in der Einrastvorrichtung des Trägerrahmens 5 des Projektors 3 eingerastet, so dass der Projektor 3 und die Tafel 2 nur gemeinsam entlang der Y-Richtung bewegt werden können.

Fig. 7 zeigt eine Detailansicht des in Fig. 3 dargestellten Bereiches VII. Das dem Boden zugewandete Ende des Trägerrahmens 5 ist angeschrägt, so dass das vorstehende Ende der Stange 9 bei einer Bewegung der Tafel 2 nach oben langsam entgegen der X-Richtung gegen die Federkraft der Federeinrichtung gedrückt wird, ohne dass gleichzeitig der Trägerrahmen in positiver Y-Richtung verschoben wird. Sobald jedoch das Ende der Stange 9 wie in Fig. 7 gezeigt in die Einrastvorrichtung 8 des Trägerrahmens 5 eingerastet ist, wird bei einer Bewegung der Tafel 2 aufgrund der mechanischen Koppelung gleichzeitig der Trägerrahmen 5 und somit auch der am Trägerrahmen 5 befestigte Projektor 3 bewegt.

## Patentansprüche

1. Tafelanordnung (1) mit einer Tafel (2) und einem Projektor (3), bei der die Tafel (2) und der Projektor (3) entlang einer ersten Richtung (Y) geführt und verschiebbar angeordnet sind, und eine lösbare Kopplungsvorrichtung (8, 9) zum Koppeln der Bewegung der Tafel (2) und des Projektors (3) vorgesehen ist, wobei im gekoppelten Zustand der lösbaren Kopplungsvorrichtung die Tafel (2) und der Projektor (3) nur gemeinsam verschiebbar sind, während im entkoppelten Zustand der lösbaren Kopplungsvorrichtung zumindest die Tafel (2) separat verschiebbar ist.

2. Tafelanordnung (1) nach Anspruch 1, ferner umfassend eine weitere Tafel (10), welche entlang der ersten Richtung (Y) geführt und verschiebbar angeordnet ist.

3. Tafelanordnung (1) nach Anspruch 1 oder 2, ferner umfassend einen Trägerrahmen (5), an dem der Projektor (3) befestigt ist, wobei die Kopplungsvorrichtung eine an einem sich entlang der ersten Richtung erstreckenden Element (5-1, 5-2) des Trägerrahmens (5) vorgesehene Einrastvorrichtung (8) und eine an der Tafel (2) befestigte, und entlang einer zweiten Richtung (X) beweglich gelagerte Stange (9) aufweist, und im gekoppelten Zustand ein Ende der Stange (9) in der Einrastvorrichtung (8) einrastet.

4. Tafelanordnung (1) nach Anspruch 3, bei der die Kopplungsvorrichtung eine weitere an einem sich entlang der ersten Richtung erstreckenden weiteren Element (5-1, 5-2) des Trägerrahmens (5) vorgesehene Einrastvorrichtung (8) und eine weitere an der Tafel (2) befestigte, und entlang der zweiten Richtung (X) beweglich gelagerte Stange (9) aufweist, und eine Federeinrichtung zwischen der Stange und der weiteren Stange (9) vorgesehen ist, welche entfernte Enden der ersten und der zweiten Stange (9) in entgegengesetzte Richtungen drückt, wobei im gekoppelten Zustand die entfernten Enden der Stange und der weiteren Stange (9) jeweils in den entsprechenden Einrastvorrichtungen (8) einrasten,

5. Tafelanordnung (1) nach Anspruch 4, bei der die Stange und die weitere Stange (9) unterhalb einer an der Tafel (2) befestigten Griffleiste (12) gelagert sind und einander zugewandte Enden der Stange und der weiteren Stange (9) mit Griffeinrichtungen versehen sind, welche über Eingriffsöffnungen in der Griffleiste (12) zugänglich sind.

6. Tafelanordnung (1) nach einem der Ansprüche 4 oder 5, bei der die Elemente (5-1, 5-2) des Trägerrahmens (5) ein abgeschrägtes Ende aufweisen.

7. Tafelanordnung (1) nach einem der Ansprüche 3 bis 6, ferner umfassend eine Führungseinrichtung (4), welche mehrere Paare Führungsschienen (4-1, 4-2, 4-3) aufweist, wobei die Tafel (2) an einem zweiten Trägerrahmen (6) befestigt ist, welcher von einem ersten Paar der mehreren Führungsschienen (4-1, 4-2, 4-3) geführt wird und der Trägerrahmen (5) von einem zweiten Paar der mehreren Paare Führungsschienen (4-1, 4-2, 4-3) geführt wird.

8. Tafelanordnung (1) nach Anspruch 7, ferner umfassend einen dritten Trägerrahmen (7), an dem die weitere Tafel (10) befestigt ist, wobei der dritte Trägerrahmen (7) von einem dritten Paar Führungsschienen (4-1, 4-2, 4-3) entlang der ersten Richtung (Y) geführt und verschiebbar angeordnet ist.

9. Tafelanordnung (1) nach Anspruch 1 oder 2, bei der die lösbare Kopplungsvorrichtung zumindest einen Elektromagneten umfasst.

10. Tafelanordnung (1) nach Anspruch 9, ferner umfassend einen Trägerrahmen (5), an dem der Projektor (3) befestigt ist, wobei der Elektromagnet entweder an einem oberen Ende der Tafel (2) vorgesehen ist und zumindest ein dem Elektromagneten im gekoppelten Zustand gegenüberliegender Teilabschnitt des Trägerrahmens (5) magnetisierbar oder als Dauermagnet ausgebildet ist, oder der Elektromagnet an einem unteren Ende des Trägerrahmens (5) vorgesehen ist und zumindest ein dem Elektromagneten im gekoppelten Zustand gegenüberliegender Teilabschnitt eines oberen Endes der Tafel (2) magnetisierbar oder als Dauermagnet ausgebildet ist.

11. Tatelanordnung (1) nach Anspruch 10, wobei der Elektromagnet mittels eines Schalters ansteuerbar ist, weicher zum Ein- bzw. Ausschalten eines Stromflusses durch den Elektromagneten vorgesehen ist.

12. Tafelanordnung (1) nach Anspruch 10 oder 11, ferner umfassend eine Führungseinrichtung (4), welche mindestens ein Paar Führungsschienen (4-1, 4-2, 4-3) aufweist, wobei die Tafel (2) an einem zweiten Trägerrahmen (6) befestigt ist, und der Trägerrahmen (5) und der zweite Trägerrahmen (6) von dem mindestens einen Paar Führungsschienen (4-1, 4-2, 4-3) geführt werden.

13. Tafelanordnung (1) nach Anspruch 12, ferner umfassend einen dritten Trägerrahmen (7), an dem die weitere Tafel (10) befestigt ist, wobei der dritte Trägerrahmen (7) von einem weiteren Paar Führungsschienen (4-1, 4-2, 4-3) entlang der ersten Richtung (Y) geführt und verschiebbar angeordnet ist.

14. Tafelanordnung (1) nach einem der Ansprüche 1 bis 13, bei der zumindest ein Bereich der Tafel (2) als interaktives Whiteboard ausgebildet ist.

15. Tafelanordnung (1) nach einem der Ansprüche 1 bis 13, bei der der Projektor (3) als Kurzdistanz-Beamer ausgebildet ist und Detektoren zur Erfassung einer Position eines interaktiven Stifts in einem Bereich der Tafel (2) aufweist.
